# EUROPÄISCHE PATENTSCHRIFT

(11) **EP 1 165 706 B1**
(45) Veröffentlichungstag und Bekanntmachung des Hinweises auf die Patenterteilung: **27.04.2005**
(21) Anmeldenummer: 00916834.5
(22) Anmeldetag: 15.02.2000
(51) Int. Cl.: C09D 5/18

(54) **BRANDSCHUTZBESCHICHTUNG**
FIRE PROTECTION COATING
REVETEMENT IGNIFUGEANT

(30) Priorität: 04.03.1999 DE 19909387
(43) Veröffentlichungstag der Anmeldung: 02.01.2002
(73) Patentinhaber: Clariant GmbH, 65929 Frankfurt am Main (DE)
(72) Erfinder: PIRIG, Wolf-Dieter, D-53879 Euskirchen (DE); THEWES, Volker, 50374 Erftstadt (DE)
(86) Internationale Anmeldenummer: PCT/EP2000/001211
(87) Internationale Veröffentlichungsnummer: WO 2000/052104

(56) Entgegenhaltungen:
- WO-A-98/45364
- GB-A- 2 121 056
- US-A- 5 225 464

## Beschreibung

Die Erfindung betrifft eine dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen.

Dämmschichtbildende Brandschutzbeschichtungen, auch Intumeszenzbeschichtungen genannt, zeichnen sich dadurch aus, daß sie im Brandfall unter entsprechender Temperatureinwirkung aufschäumen und durch dieses Aufschäumen der vorgenannten Brandschutzbeschichtung der Wärmedurchtritt auf Stahlkonstruktionen, Decken, Wände, Kabel, Rohre und dergleichen verhindert oder zumindest behindert wird.

Die US 4,965,296 A1 beschreibt ein flammhemmendes Material, das sich aus einem flammhemmenden Beschichtungsmaterial und einem elektrisch leitfähigen Material zusammensetzt. Das flammhemmende Beschichtungsmaterial besteht dabei aus schaum- und kohlenstoffbildenden Substanzen, einer gaserzeugenden Verbindung, einem filmbildenden Bindemittel und entsprechenden Lösemitteln. Fakultativ können übliche, weitere Inhaltsstoffe anwesend sein.

In der US 4,879,320 wird eine ähnliche flammhemmende Zusammensetzung beschrieben, der jedoch anstelle eines leitfähigen Materials ein keramisches Fasermaterial zugesetzt ist.

Die US 5,225,464 beschreibt eine wäßrige Intumeszenz-Formulierung auf Basis eines Reaktionsproduktes aus Phosphorsäure, Melamin und Monoammoniumphosphat, welche mit Pentaerythritol, chlorierten Kohelnwasserstoffen und weiteren Verbindungen, insbesondere Polyvinylacetat, ein verbessertes Intumeszenz-Beschichtungsmaterial liefern soll.

Zahlreiche intumeszierende Formulierungen sind aus dem "Fire Retardants Formulations Handbook" (Autor: Vijay Mohan Bhatnagar, 1972) bekannt.

Die DE 42 18 184 A 1 beschreibt ein wäßriges Bindemittelgemisch, bestehend aus einer wäßrigen Lösung und/oder Dispersion einer Kombination aus a) mindestens einem in Gegenwart der Komponente b) in Wasser löslichen und/oder dispergierbaren, Urethangruppen aufweisenden NCO-Vorpolymer mit blockierten Isocyanatgruppen und b) einer Polyamin-Komponente, bestehend aus mindestens einem (cyclo)aliphatischen Polyamin mit mindestens zwei primären und/oder sekundären Aminogruppen.

Die DE 43 43 668 schließlich beschreibt aufblähbare, flammhemmende Überzugsmassen, bestehend mindestens aus

| | |
|---|---|
| 4 bis 25 Gewichts-% | eines filmbildenden Bindemittels, |
| 10 bis 4 Gewichts-% | Ammoniumpolyphosphat, |
| 8 bis 40 Gewichts-% | mindestens einer bei Hitzeeinwirkung carbonisierenden Substanz, |
| 6 bis 25 Gewichts-% | eines Treibmittels, |
| 0 bis 5. Gewichts-% | Dispergiermittel, |
| 0 bis 25 Gewichts-% | Füllstoffe. |

Nachteilig bei den vorgenannten Brandschutzbeschichtungen ist insgesamt, daß sie halogenhaltig sind und/oder nach Trocknung keine ausreichende Wasserfestigkeit aufweisen.

Insbesondere ist die Verwendung von Melamin als Treibmittel nachteilig zu bewerten, da es in wässerigen Aufschlämmungen basisch reagiert. Somit steht es jeder in wässeriger Lösung sauer reagierenden Komponente einer dämmschichtbildenden Brandschutzbeschichtung als Reaktionspartner zur Verfügung. Bekanntermaßen reagieren Melamin und Ammoniumpolyphosphat in wässeriger Lösung unter Freisetzung von Ammoniak (NH₃). Diese Reaktion kann auch in einer getrockneten dämmschichtbildenden Brandschutzbeschichtung in Gegenwart von erhöhter Temperatur und erhöhter Luftfeuchtigkeit stattfinden und somit die brandschutztechnischen Eigenschaften der Beschichtung reduzieren.

Es ist daher Aufgabe der vorliegenden Erfindung, dämmschichtbildende Brandschutzbeschichtungen zur Verfügung zu stellen, die ohne Verwendung von Melamin nach Trocknung wasserfest sind und auch bei erhöhter Luftfeuchtigkeit und erhöhter Temperatur nur extrem geringe Mengen an NH₃ freisetzen.

Diese Aufgabe wird gelöst durch eine dämmschichtbildende Brandschutzbeschichtung der eingangs beschriebenen Art, deren kennzeichnenmerkmale in Patentanspruch 1 angegeben sind.

Bevorzugt entspricht das Melaminpolyphosphat der Formel (HMPO₃)ₙ, in der M für Melamin steht und n ≥ 2, insbesondere 2 bis 10.000 ist.

Bei Melaminpolyphosphat handelt es sich um ein Polymer aus Melamin- und Phosphateinheiten, die zu kürzeren und längeren Ketten verknüpft sind. Die Verteilung der Melamin- und Phosphateinheiten kann regelmäßig oder unregelmäßig sein, sie können gegebenenfalls auch in sich selber polymerisiert sein. Es können auch Derivate des Melamins, wie Melem, Melam und andere enthalten sein.

Entsprechend seiner unterschiedlichen Kettenlänge und der Verteilung bzw. Häufung der Melamin- und Phosphateinheiten kann das Melaminpolyphosphat in seinen Eigenschaften innerhalb gewisser Grenzen variieren.

Melaminpolyphosphat ist beispielsweise in der PCT/WO 98/45364 näher beschrieben, es wird dort auch als Melaminsalz der Polyphosphorigen Säure bezeichnet, wobei die polymere Kette aus (HMPO₃)-Einheiten [M steht für Melamin] besteht und n ≥ 2, insbesondere 5 bis 10.000 ist.

Melaminpolyphosphat wird üblicherweise durch Erhitzen von Melaminpyrophosphat unter Stickstoffatmosphäre bei Temperaturen von 290 °C und mehr bis zur Gewichtskonstanz erhalten (PCT/WO 98/08898).

Bevorzugt enthält die dämmschichtbildende Brandschutzbeschichtung

| | |
|---|---|
| 5 bis 30 Gewichtsteile | filmbildendes Bindemittel, |
| 10 bis 50 Gewichtsteile | schaumschichtbildende Substanz, |
| 5 bis 25 Gewichtsteile | einer kohlenstoffbildenden Substanz, |
| 5 bis 50 Gewichtsteile | Melaminpolyphosphat |
| 10 bis 50 Gewichtsteile | an üblichen Hilfs- und Zusatzstoffen. |

Besonders bevorzugt enthält die dämmschichtbildende Brandschutzbeschichtung

| | |
|---|---|
| 10 bis 20 Gewichtsteile | filmbildendes Bindemittel, |
| 15 bis 40 Gewichtsteile | schaumschichtbildende Substanz, |
| 7 bis 15 Gewichtsteile | einer kohlenstoffbildenden Substanz, |
| 7 bis 40 Gewichtsteile | Melaminpolyphosphat |
| 20 bis 40 Gewichtsteile | an üblichen Hilfs- und Zusatzstoffen. |

Erfindungsgemäß enthält die dämmschichtbildende Brandschutzbeschichtung als filmbildende Bindemittel
Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylat-Copolymer,
Styrol/Acrylat-Copolymer,
Vinyl/Acrylat-Copolymer,
Selbstvernetzende Polyurethan-Dispersionen.

Bevorzugt enthält die dämmschichtbildende Brandschutzbeschichtung als schaumbildende Substanzen Ammoniumsalze von Phosphorsäuren und/oder Polyphosphorsäuren.

Bevorzugt enthält die dämmschichtbildende Brandschutzbeschichtung als kohlenstoffbildende Substanzen Kohlenhydrate.

Bevorzugt werden als Kohlenhydrate Pentaerythrit, Dipentaerythrit, Tripentaerythrit und/oder Polykondensate des Pentaerythrits eingesetzt.

Bevorzugt enthält die dämmschichtbildende Brandschutzbeschichtung als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverisierte Cellulosen.

Bevorzugt ist die dämmschichtbildende Brandschutzbeschichtung gemäß der Erfindung halogenfrei.

Die erfindungsgemäße dämmschichtbildende Brandschutzbeschichtung setzt bei Lagerung unter erhöhter (Luft)feuchtigkeit (bis zu 100 % rel. Feuchte) und erhöhter Temperatur (ca. 75 °C) weniger als 200 ppm NH₃ frei.

Die erfindungsgemäße Brandschutzbeschichtung (Intumeszenzbeschichtung) gelangt in Form eines streich-, spritz- oder rollfähigen Anstrichmittels zum Schutz von unterschiedlichsten Untergründen, vorzugsweise von Stahl, Holz, Elektrokabeln und Rohren, zum Einsatz.

In den folgenden Beispielen wurden Intumeszenzbeschichtungen hergestellt, auf Normstahlplatten aufgetragen und ihre Wirksamkeit ermittelt. Die Prüfung der Isolierfähigkeit erfolgte nach DIN 4102, Teil 8 (1986). Die Wasserfestigkeit wurde geprüft, indem die beschichteten Normstahlplatten vor der Prüfung der Isolierfähigkeit im Klimaschrank bei 40 °C und 95 % iger Luftfeuchtigkeit über 4 Wochen gelagert wurden.

Zur Feststellung der NH₃-Freisetzung werden die getrockneten Probenplatten in ein geschlossenes Glassystem gegeben. Dieses besteht aus einer 500 ml-Glasflasche und einem Glasdeckel mit 2 Hähnen. Zur Simulation der Luftfeuchtigkeit (ca. 100 % rel. Feuchte) befindet sich in dem Glassystem eine Glaswanne mit 10 ml Leitungswasser. Das Glassystem wird mit einem geschlossenen Hahn bei 75 °C in einen Umlufttrockenschrank gestellt. Der zweite Hahn wird nach 10 Minuten im Trockenschrank ebenfalls geschlossen. Die Verweildauer der Flasche im Trockenschrank beträgt von da ab 120 Minuten. Danach wird die Flasche aus dem Trockenschrank genommen und ein Hahn mittels eines Zwischenstückes mit einem Dräger- Röhrchen versehen. An den zweiten Hahn wird Stickstoff in einer Geschwindigkeit von 5 1 pro Stunde angelegt. Die Flasche wird 30 Minuten ausgeblasen und die freigesetzten Ammoniak-Mengen werden direkt am Dräger-Röhrchen abgelesen.

In den Beispielen wurden folgende Produkte eingesetzt:

### ® Pliolite (Solid) (Goodyear/Frankreich)

Es handelt sich um ein newtonisches, thermoplastisches Harz auf Basis von Vinyltoluol/Acrylat-Copolymere.

### ® Exolit AP 462 (Clariant GmbH, Frankfurt am Main)

Es handelt sich um ein mikroverkapseltes Ammoniumpolyphosphat auf Basis ® Exolit AP 422, das nach dem Verfahren der EP-B-0 180 795 hergestellt wurde und etwa 10 Masse% Kapselmaterial, bestehend aus einem gehärteten Melamin/Formaldehyd-Harz, enthält.

Bei ® Exolit AP 422 (Clariant GmbH, Frankfurt am Main) handelt es sich um ein freifliessendes, pulverförmiges, in Wasser schwer lösliches Ammoniumpolyphosphat der Formel (NH₄PO₃) mit n = 20 bis 1000, insbesondere 500 bis 1000. Der Anteil der Teilchen mit einer Teilchengröße kleiner 45 µm beträgt mehr als 99 %.

### Beispiel 1 (Vergleich)

Es wurden die folgenden Substanzen nacheinander vermischt und anschließend entsprechend auf die zu prüfende Platte aufgetragen:

| | |
|---|---|
| 38 Gewichtsteile | ® Exolit AP 462 |
| 10 Gewichtsteile | ® Pliolite (Solid) |
| 8 Gewichtsteile | Melamin |
| 8 Gewichtsteile | Dipentaerythrit |
| 8 Gewichtsteile | Titandioxid |

ad 100 Gewichtsteile Verdicker, Weichmacher, Lösungsmittel.

Die Brandprüfung der beschichteten Platte gemäß DIN 4102 ergab die Brandklasse F 30.
Nach der Lagerung im Klimaschrank ergab die Brandklasse ebenfalls F 30.
Die Messung der NH₃ - Freisetzung ergab 4625 ppm NH₃.

### Beispiel 2 (Erfindung)

Es wurden die folgenden Substanzen nacheinander vermischt und anschließend entsprechend auf die zu prüfende Platte aufgetragen:

| | |
|---|---|
| 32 Gewichtsteile | ® Exolit AP 462 |
| 10 Gewichtsteile | ® Pliolite (Solid) |
| 13 Gewichtsteile | Melaminpolyphosphat |
| 8 Gewichtsteile | Dipentaerythrit |
| 8 Gewichtsteile | Titandioxid |

ad 100 Gewichtsteile Verdicker, Weichmacher, Lösungsmittel.

Die Brandprüfung der beschichteten Platte gemäß DIN 4102 ergab die Brandklasse F 60. Nach der Lagerung im Klimaschrank ergab die Brandklasse ebenfalls F 60.
Die Messung der NH₃ - Freisetzung ergab 80 ppm NH₃.

### Beispiel 3 (Vergleich)

Es wurden die folgenden Substanzen nacheinander vermischt und anschließend entsprechend auf die zu prüfende Platte aufgetragen:

| | |
|---|---|
| 30 Gewichtsteile | ® Exolit AP 422 |
| 22 Gewichtsteile | Polyvinylacetat-Copolymer (50%ig) |
| 19 Gewichtsteile | Melamin |
| 13 Gewichtsteile | Pentaerythrit |
| 5 Gewichtsteile | Titandioxid |

ad 100 Gewichtsteile Verdicker, Füllstoffe, Wasser, Dispergiermittel, Konservierungsmittel.

Die Brandprüfung der beschichteten Platte gemäß DIN 4102 ergab die Brandklasse F 30. Nach der Lagerung im Klimaschrank wurde die Brandklasse F 30 nicht mehr erreicht.
Die Messung der NH₃ - Freisetzung ergab 5200 ppm NH₃.

### Beispiel 4 (Erfindung)

Es wurden die folgenden Substanzen nacheinander vermischt und anschließend entsprechend auf die zu prüfende Platte aufgetragen:

| | |
|---|---|
| 18 Gewichtsteile | ® Exolit AP 422 |
| 22 Gewichtsteile | Polyvinylacetat-Copolymer (50%ig) |
| 30 Gewichtsteile | Melaminpolyphosphat |
| 13 Gewichtsteile | Pentaerythrit |
| 5 Gewichtsteile | Titandioxid |

ad 100 Gewichtsteile Verdicker, Füllstoffe, Wasser, Dispergiermittel, Konservierungsmittel.

Die Brandprüfung der beschichteten Platte gemäß DIN 4102 ergab die Brandklasse F 30. Nach der Lagerung im Klimaschrank ergab die Brandklasse F 30.
Die Messung der NH₃ - Freisetzung ergab 180 ppm NH₃.

### Beispiel 5 (Vergleich)

Es wurden die folgenden Substanzen nacheinander vermischt und anschließend entsprechend auf die zu prüfende Platte aufgetragen:

| | |
|---|---|
| 30 Gewichtsteile | ® Exolit AP 422 |
| 22 Gewichtsteile | aliphatische Urethan-Acryl-Hybrid Dispersion (30%ig) |
| 17 Gewichtsteile | Melamin |
| 12 Gewichtsteile | Pentaerythrit |
| 5 Gewichtsteile | Titandioxid |

ad 100 Gewichtsteile Verdicker, Füllstoffe, Wasser, Dispergiermittel, Konservierungsmittel.

Die Brandprüfung der beschichteten Platte gemäß DIN 4102 ergab die Brandklasse F 60. Nach der Lagerung im Klimaschrank die Brandklasse noch F 30.
Die Messung der NH₃ - Freisetzung ergab 4850 ppm NH₃.

### Beispiel 6 (Erfindung)

Es wurden die folgenden Substanzen nacheinander vermischt und anschließend entsprechend auf die zu prüfende Platte aufgelegen:

| | |
|---|---|
| 19 Gewichtsteile | ® Exolit AP 422 |
| 22 Gewichtsteile | aliphatische Urethan-Acryl-Hybrid Dispersion (30%ig) |
| 27 Gewichtsteile | Melaminpolyphosphat |
| 12 Gewichtsteile | Di-Pentaerythrit |
| 5 Gewichtsteile | Titandioxid |

ad 100 Gewichtsteile Verdicker, Füllstoffe, Wasser, Dispergiermittel, Konservierungsmittel.

Die Brandprüfung der beschichteten Platte gemäß DIN 4102 ergab die Brandklasse F 60.
Nach der Lagerung im Klimaschrank ergab die Brandklasse F 60.
Die Messung der NH₃ ― Freisetzung ergab 130 ppm NH₃.

Wie aus den Beispielen hervorgeht, kann durch den Einsatz von Melaminpolyphosphat die NH₃-Freisetzung um einen Faktor von mindestens 25 gegenüber Melamin verringert werden.

## Patentansprüche

1. Dämmschichtbildende Brandschutzbeschichtung auf Basis von im Brandfall schaumschichtbildenden und kohlenstoffbildenden Substanzen, filmbildenden Bindemitteln, Treibmitteln und üblichen Hilfs- und Zusatzstoffen, **dadurch gekennzeichnet, daß** sie als Treibmittel Melaminpolyphosphat und als als filmbildende Bindemittel Homopolymerisate auf Basis Vinylacetat,
Copolymerisate auf Basis Vinylacetat, Ethylen und Vinylchlorid,
Copolymerisate auf Basis Vinylacetat und dem Vinylester einer langkettigen, verzweigten Carbonsäure,
Copolymerisate auf Basis Vinylacetat und Maleinsäure-di-n-Butylester,
Copolymerisate auf Basis Vinylacetat und Acrylsäureester,
Copolymerisate auf Basis Styrol und Acrylsäureester und/oder
Copolymerisate auf Basis Acrylsäureester,
Vinyltoluol/Acrylol-Copolymer,
Styrol/Acrylat-Polymere,
Vinyl/Acrylat-Copolymere,
Selbstvernetzende Polyurethan - Dispersionen
enthält.

2. Dämmschichtbildende Brandschutzbeschichtung nach Anspruch 1, **dadurch gekennzeichnet, daß** das Melaminpolyphosphat der Formel (HMPO₃)ₙ, in der M für Melamin steht und n ≥ 2, insbesondere 2 bis 10.000 ist, entspricht.

3. Dämmschichtbildende Brandschutzbeschichtung nach Anspruch 1 oder 2, **dadurch gekennzeichnet, daß** sie
| | |
|---|---|
| 5 bis 30 Gewichtsteile | filmbildendes Bindemittel, |
| 10 bis 50 Gewichtsteile | schaumschichtbildende Substanz, |
| 5 bis 25 Gewichtsteile | einer kohlenstoffbildenden Substanz, |
| 5 bis 50 Gewichtsteile | Melaminpolyphosphat und |
| 10 bis 50 Gewichtsteile | an üblichen Hilfs- und Zusatzstoffen. |
enthält.

4. Dämmschichtbildende Brandschutzbeschichtung nach Anspruch 1 oder 2, **dadurch gekennzeichnet, daß** sie
| | |
|---|---|
| 10 bis 20 Gewichtsteile | filmbildendes Bindemittel, |
| 15 bis 40 Gewichtsteile | schaumschichtbildende Substanz, |
| 7 bis 15 Gewichtsteile | einer kohlenstoffbildenden Substanz, |
| 7 bis 40 Gewichtsteile | Melaminpolyphosphat und |
| 20 bis 40 Gewichtsteile | an üblichen Hilfs- und Zusatzstoffen. |
enthält.

5. Dämmschichtbildende Brandschutzbeschichtung nach einem der Ansprüche 1 bis 4, **dadurch gekennzeichnet, daß** als schaumbildende Substanzen Ammoniumsalze von Phosphorsäuren und/oder Polyphosphorsäuren enthalten sind.

6. Dämmschichtbildende Brandschutzbeschichtung nach einem der Ansprüche, 1 bis 5 **dadurch gekennzeichnet, daß** als kohlenstoffbildende Substanzen Kohlenhydrate enthalten sind.

7. Dämmschichtbildende Brandschutzbeschichtung nach Anspruch 6, **dadurch gekennzeichnet, daß** als Kohlenhydrate Pentaerythrit, Dipentaerythrit, Tripentaerythrit und/oder Polykondensate des Pentaerythrits eingesetzt werden.

8. Dämmschichtbildende Brandschutzbeschichtung nach einem der Ansprüche 1 bis 7, **dadurch gekennzeichnet, daß** als Hilfs- und Zusatzstoffe Glasfasern, Mineralfasern, Kaolin, Talkum, Aluminiumoxid, Aluminiumhydroxid, Magnesiumhydroxid, Fällungskieselsäuren, Silikate und/oder pulverische Cellulosen enthalten sind.

9. Dämmschichtbildende Brandschutzbeschichtung nach einem der Ansprüche 1 bis 8, **dadurch gekennzeichnet, daß** sie halogenfrei ist.

10. Dämmschichtbildende Brandschutzbeschichtung nach einem der Ansprüche 1 bis 9, **dadurch gekennzeichnet, daß** sie bei Lagerung unter erhöhter Feuchtigkeit bis zu 100 % rel. Feuchte und erhöhter Temperatur (ca. 75 °C) weniger als 200 ppm NH₃ freisetzt.

## Claims

1. A flame-retardant coating which forms an insulating layer and is based on substances which carbonize and which form a foam layer in the event of a fire, on film-forming binders, on blowing agents and on customary auxiliaries and additives, which comprises melamine polyphosphate as blowing agent and
homopolymers based on vinyl acetate,
copolymers based on vinyl acetate, ethylene and vinyl chloride,
copolymers based on vinyl acetate and the vinyl ester of a long-chain branched carboxylic acid,
copolymers based on vinyl acetate and di-n-butyl maleate,
copolymers based on vinyl acetate and acrylates,
copolymers based on styrene and acrylates, and/or copolymers based on acrylates,
vinyltoluene-acrylol copolymer,
styrene-acrylate polymers,
vinyl-acrylate copolymers,
self-crosslinking polyurethane dispersions as film-forming binders.

2. A flame-retardant coating which forms an insulating layer, as claimed in claim 1, wherein the melamine polyphosphate has the formula (HMPO₃)ₙ, where M is melamine and n ≥ 2, in particular from 2 to 10 000.

3. A flame-retardant coating which forms an insulating layer, as claimed in claim 1 or 2, which comprises
from 5 to 30 parts by weight of film-forming binder,
from 10 to 50 parts by weight of a substance which forms a foam layer,
from 5 to 25 parts by weight of a substance which carbonizes,
from 5 to 50 parts by weight of melamine polyphosphate, and
from 10 to 50 parts by weight of customary auxiliaries and additives.

4. A flame-retardant coating which forms an insulating layer, as claimed in claim 1 or 2, which comprises
from 10 to 20 parts by weight of film-forming binder,
from 15 to 40 parts by weight of a substance which forms a foam layer,
from 7 to 15 parts by weight of a substance which carbonizes,
from 7 to 40 parts by weight of melamine polyphosphate, and
from 20 to 40 parts by weight of customary auxiliaries and additives.

5. A flame-retardant coating which forms an insulating layer, as claimed in any of claims 1 to 4, wherein the foam-forming substances present comprise ammonium salts of phosphoric acids and/or polyphosphoric acids.

6. A flame-retardant coating which forms an insulating layer, as claimed in any of claims 1 to 5, wherein the substances present which carbonize comprise carbohydrates.

7. A flame-retardant coating which forms an insulating layer, as claimed in claim 6, wherein the carbohydrates used comprise pentaerythritol, dipentaerythritol, tripentaerythritol and/or polycondensates of pentaerythritol.

8. A flame-retardant coating which forms an insulating layer, as claimed in any of claims 1 to 7, wherein the auxiliaries and additives present comprise glass fibers, mineral fibers, kaolin, talc, aluminum oxide, aluminum hydroxide, magnesium hydroxide, precipitation silicas, silicates and/or pulverulent celluloses.

9. A flame-retardant coating which forms an insulating layer, as claimed in any one of claims 1 to 8, which is halogen-free.

10. A flame-retardant coating which forms an insulating layer, as claimed in any of claims 1 to 9, which releases less than 200 ppm of NH₃ when stored under high-moisture conditions at up to 100% rel. humidity, and at increased temperature (about 75°C).

## Revendications

1. Revêtement ignifuge formant une couche isolante à base de substances formant en cas d'incendie une couche de mousse et du carbone, de liants filmogènes, d'agents porogènes et d'adjuvants et additifs usuels, **caractérisé en ce qu'**il contient, en tant qu'agent porogène, du polyphosphate de mélamine, et en tant que liants filmogènes
des homopolymères à base d'acétate de vinyle,
des copolymères à base d'acétate de vinyle, d'éthylène et de chlorure de vinyle,
des copolymères à base d'acétate de vinyle et de l'ester vinylique d'un acide carboxylique à longue chaîne ramifiée,
des copolymères à base d'acétate de vinyle et de maléate de di-n-butyle,
des copolymères à base d'acétate de vinyle et d'esters de l'acide acrylique,
des copolymères à base de styrène et d'esters de l'acide acrylique et/ou
des copolymères à base d'esters d'acide acrylique,
un copolymère vinyltoluène/acrylate,
un copolymère styrène/acrylate,
un copolymère vinyl/acrylate,
des dispersions de polyuréthanne autoréticulables.

2. Revêtement ignifuge formant une couche isolante selon la revendication 1, **caractérisé en ce que** le polyphosphate de mélamine correspond à la formule (HMPO₃)ₙ dans laquelle M est la mélamine et n ≥ 2 et est en particulier compris entre 2 et 10 000.

3. Revêtement ignifuge formant une couche isolante selon la revendication 1 ou 2, **caractérisé en ce qu'**il contient
5 à 30 parties en poids d'un liant filmogène,
10 à 50 parties en poids d'une substance formant une couche de mousse,
5 à 25 parties en poids d'une substance formant du carbone,
5 à 50 parties en poids de polyphosphate de mélamine,
10 à 50 parties d'adjuvants et additifs usuels.

4. Revêtement ignifuge formant une couche isolante selon la revendication 1 ou 2, **caractérisé en ce qu'**il contient
10 à 20 parties en poids d'un liant filmogène,
15 à 40 parties en poids d'une substance formant une couche de mousse,
7 à 15 parties en poids d'une substance formant du carbone,
7 à 40 parties en poids de polyphosphate de mélamine,
20 à 40 parties d'adjuvants et additifs usuels.

5. Revêtement ignifuge formant une couche isolante selon l'une des revendications 1 à 4, **caractérisé en ce qu'**il contient en tant que substances formant une mousse des sels d'ammonium d'acides phosphoriques et/ou d'acides polyphosphoriques.

6. Revêtement ignifuge formant une couche isolante selon l'une des revendications 1 à 5, **caractérisé en ce qu'**il contient en tant que substances formant du carbone des hydrates de carbone.

7. Revêtement ignifuge formant une couche isolante selon l'une la revendication 6, **caractérisé en ce qu'**on utilise en tant qu'hydrates de carbone le pentaérythritol, le dipentaérythritol, le tripentaérythritol et/ou des produits de polycondensation du pentaérythritol.

8. Revêtement ignifuge formant une couche isolante selon l'une des revendications 1 à 7, **caractérisé en ce qu'**il contient en tant qu'adjuvants et additifs des fibres de verre, des fibres minérales, du kaolin, du talc, de l'oxyde d'aluminium, de l'hydroxyde d'aluminium, de l'hydroxyde de magnésium, des silices précipitées, des silicates et/ou des celluloses en poudre.

9. Revêtement ignifuge formant une couche isolante selon l'une des revendications 1 à 8, **caractérisé en ce qu'**il est non-halogéné.

10. Revêtement ignifuge formant une couche isolante selon l'une des revendications 1 à 9, **caractérisé en ce que**, après stockage en présence d'une humidité élevée allant jusqu'à 100 % d'humidité relative et d'une haute température (environ 75°C), il libère moins de 200 ppm de NH₃.
